# EUROPÄISCHE PATENTSCHRIFT

(11) **EP 1 669 635 B1**
(45) Veröffentlichungstag und Bekanntmachung des Hinweises auf die Patenterteilung: **12.03.2008**
(21) Anmeldenummer: 05026708.7
(22) Anmeldetag: 07.12.2005
(51) Int. Cl.: F16G 1/08, F16G 5/06

(54) **Mehrschichtiges Band**
Multilayer belt
Bande multicouche

(30) Priorität: 08.12.2004 DE 102004059270
(43) Veröffentlichungstag der Anmeldung: 14.06.2006
(73) Patentinhaber: FORBO SIEGLING GMBH, 30179 Hannover (DE)
(72) Erfinder: Kämper, Thomas, Dr., 30938 Burgwedel (DE); Neelen, Neele, Dr., 30659 Hannover (DE)
(74) Vertreter: Scheffler, Jörg

(56) Entgegenhaltungen:
- WO-A-97/21938
- DE-A1- 4 039 584
- US-A- 5 697 491

## Beschreibung

Die Erfindung betrifft ein mehrschichtiges Band, insbesondere Antriebs- oder Transportband, mit einer Zugschicht und mit einer Endlosverbindung, gemäß dem Oberbegriff des Anspruchs 1. Ein solches Band ist aus der US-A-5,697,491 bekannt.

Ein vorgenanntes Band ist allgemein als Antriebsriemen oder Maschinenband bekannt. Derart ausgebildete Antriebsriemen und Maschinenbänder besitzen massive Folien aus verstrecktem Polyamid (PA) 6 als Zugträger: eine allgemeine Bezeichnung für Zugträger ist Zugschicht. Diese PA-Folien haben einen Schmelzpunkt von ca. 230 °C. Um stärkere Zugträger zu erhalten, können auch mehrere von diesen Folien laminiert und/oder verklebt werden. Als Funktionsschicht sind diese Zugträger gegebenenfalls mit Leder, Gummi oder Geweben beschichtet. Das Grundmaterial inklusive Funktionsschicht wird als Rollenware gefertigt. Um einen endlosen Riemen zu erhalten, werden belde Enden eines von einer Rolle abgelängten Riemens keilförmig angeschliffen und verklebt. Das Verkleben ist aufwendig (Klebstoff-Auftrag und Keitanschtiff) und langwierig. Darüber hinaus ist der Riemen auf Grund der Verklebung im Verbindungsbereich wesentlich steifer als im restlichen Band.

Eine andere bekannte Ausführungsform von Antriebsriemen und Maschinenbändem besitzt ein Gewebe als Zugträger. Dieses Gewebe ist eingebettet in eine thermoplastische Matrix. die ihrerseits bereits als Funktionsschicht dient und/oder mit Gummi oder Geweben als Funktionsschicht beschichtet ist. Die beiden Enden eines solchen Riemens werden Z-förmig ausgestanzt, und die beiden Enden werden daraufhin ineinander geschoben und ohne weitere Hilfsmittel verschweißt. Nachteile dieser Riemen sind ein aufwendiger Produktaufbau und eine im Vergleich zum oben genannten, mit PA-Folie aufgebauten Produkt schlechtere Kantenstabilität.

Der Erfindung liegt die Aufgabe zugrunde, ein mehrschichtiges Endlosband der eingangs genannten Art zu schaffen, das sehr zuverlässig im Betrieb ist und eine einfach aufgebaute Endlosverbindung ermöglicht.

Diese Aufgabe wird erfindungsgemäß mit einem Band gemäß den Merkmalen des Anspruchs 1 gelöst. Die Unteransprüche betreffen besonders zweckmäßige Weiterbildungen der Erfindung.

Erfindungsgemäß ist also ein mehrschichtiges Band vorgesehen, bei dem die Zugschicht, die allgemein auch als Zugträger bezeichnet wird, ein Copolymer aufweist, insbesondere aus dem Copolymer besteht. Ein Copolymer entsteht, wenn Monomere unterschiedllcher Arten chemisch verknüpft werden. Neben sehr guten mechanischen Eigenschaften erlaubt ein derart aufgebautes, erfindungsgemäßes Band vorteilhaft besonders einfach aufgebaute und leicht herzustellende Endlosverbindungen. Insbesondere ist es mit der Erfindung auch ermöglicht, für die Endlosverbindung eine Verschweißung zu verwenden. Damit kann auf einfache Weise eine Versteifung im Verbindungsbereich der Endlosverbindung vermieden werden. Gegenüber einer Verklebung wird mit einer Verschweißung zudem eine Inhomogenität in der Zugschicht, welche Inhomogenität durch eine Klebstoffschicht entstehen könnte, verhindert. Das erfindungsgemäße Band weist zudem bei Verwendung einer Copolymerfolie in der Zugschicht eine sehr hohe Kantenstabilität auf. Vorzugsweise weist das Copolymer der Zugschicht ein Copolyamid auf, insbesondere handelt es sich bei dem Copolymer um ein Copolyamid. Das Copolyamid kann vorzugsweise ein Polyamid 6 und ein Polyamid 6.6 aufweisen; bevorzugt besteht das Copolyamid aus Polyamid 6 und Polyamid 6.6. Vorteilhaft weist die das Copolymer bildende Kombination der beiden Copolymermaterialien einen niedrigeren Schmelzpunkt auf als die Schmelzpunkte der beiden Einzelkomponenten.

Die Zugschicht weist mindestens eine Copolymerfolie oder mindestens ein Copolymergewebe auf, insbesondere kann die Zugschicht aus einer Capolymerfolie oder einem Copolymergewebe bestehen. Dabei kann die Zugschicht vorteilhaft aus mindestens zwei miteinander verklebten und/oder laminierten Copolymerfolien bestehen, das heißt die Copolymerfolie ist dann mehrlagig und weist mindestens zwei Folienschichten auf. Vorteilhaft kann die Zugschicht auch aus mindestens zwei miteinander verklebten und/oder laminierten Copolymergeweben bestehen, Die Herstellung der Copolymerfolie kann vorzugsweise derart erfolgen, dass ein Copolymermaterial zunächst extrudiert, danach gereckt, nachfolgend - zum Erreichen eines gewünschten Feuchtigkeitsgehaltes - konditioniert und abschließend verklebt wird.

Von besonderem Vorteil für eine möglichst geringe Dehnung des Bandes im Betrieb ist es, dass das Copolymer gereckt ist. Die Endlosverbindung weist eine Verschweißung der Zugschicht auf; zum Beispiel kann die Endlosverbindung eine Verschweißung einer stumpfen Verbindung oder einer Keilverbindung oder einer Z-Verbindung zweier Bandenden aufweisen.

Die Zugschicht weist einen Schmelzpunkt von unter 200 °C auf. Grundsätzlich könnte man zwar daran denken, aus dem Stand der Technik bekanntes einfaches PA-Material zum Endlosverbinden zu verschweißen, jedoch ist ein solches Verschweißen praktisch nicht umsetzbar, da alle im Markt vorhandenen Endlosheizgeräte bis maximal zu einer Schweißtemperatur von 200 °C reichen. Darüber hinaus bestände die erhebliche Gefahr, dass mögliche Gummibeschichtungen beim Heizen oberhalb von 200 °C Schaden nehmen.

Bevorzugt kann für die Zugschicht ein Copolymer mit Polyamiden verwendet werden, insbesondere ein Copolymer mit einem ein Polyamid 6 und ein Polyamid 6.6 aufweisenden Copolyamid; entsprechende Materialien sind unter den Produktbezeichnungen Grilon in PA6/66 der Fa. EMS-Chemie oder Scanamid PA 6/65/66.6/11/12 Compounds der Fa. Du Pont bekannt. Bevorzugte Ausführungsformen der Erfindung umfassen die Verwendung einer gereckten Folie aus einem Copolymer, beispielsweise aus einem Copolyamid aus PA 6 und PA 6.6 wie insbesondere dem vorteilhaft zu verwendenden, unter der Marke Ultramid vertriebenen Material C40, insbesondere C40 01, der Fa. BASF, als Zugträger. Dieses Material wird gemäß Herstellerangabe zurzeit eingesetzt für Blasfolien oder Monofilamente. Dieses Material hat auf Grund seiner sutektischen Eigenschaften einen Schmelzpunkt von 190 °C. Nach dem Recken weist das Material mechanische Eigenschaften, z. B. E-Modul, auf, die eine hohe Belastung und dauerhafte Haltbarkeit des erfindungsgemäßen Bandes gewährleisten. Der Schmelzpunkt von 190 °C lässt eine Verschweißung ohne Zusatz-Hilfsstoffe mit den am Markt vorhandenen und verbreiteten Endlos-Heizgeräten zu. Beim Verschweißen gehen jedoch Im Bereich der Heizzone (Schweißzone) die durch monoaxiales Recken ins Material gebrachten hohen mechanischen Werte wie E-Modul oder Höchstzugfestigkeit verloren. Es hat sich jedoch überraschenderweise bei dynamischen Versuchen gezeigt, dass die Einschränkungen der mechanischen Eigenschaften im Verbindungsbereich nicht so groß sind, dass die Funktionsfähigkeit des kompletten Riemens gefährdet ist.

Vorzugsweise weist die Endlosverbindung eine Keilverbindung mit einer Verschweißung und einer Verklebung auf. Alternativ kann die Endlosverbindung vorteilhaft eine Verbindung mit ineinandergreifenden Elementen mit einer Verschweißung, insbesondere eine Z-Verbindung oder eine Fingerendlosverbindung mit einer Verschweißung, aufweisen. Grundsätzlich kann die Endlosverbindung aber auch eine stumpfe Verbindung zweier Bandenden aufweisen, die vorzugsweise nicht rechtwinklig zu den Seitenkanten des Bandes verläuft. Mit einem Riemen, der mit einer Copolyamidfolie als Zugträger aufgebaut ist, lassen sich besonders vorteilhaft folgende drei unterschiedliche Verbindungsarten in der Endlosverbindung realisieren: 1. Keilverbindung mit Klebstoff bei ca. 120 °C, 2. Keilverbindung ohne Klebstoff, insbesondere mit Verschweißung bei Temperaturen zwischen 190 und 200 °C, und 3. Verbindung mit Z-Stanzung (Z-Verbindung), insbesondere ebenfalls mit Verschweißung bei Temperaturen zwischen 190 und 200 °C.

Von besonderem Vorteil ist es, wenn eine Funktionsschicht aus einem Leder und/oder aus einem Gummi und/oder aus einem Textil, das heißt ein Gewebe oder ein vlies, und/oder aus einem Polymerwerkstoff, insbesondere Polyurethan, vorgesehen ist. Vorzugsweise ist die Zugschicht beidseitig mit einer Funktionsschicht versehen.

Eine hohe Kantenstabilität konnte bei dem Band mit Copolyamidfolie ebenfalls erreicht werden, sie liegt auf dem Niveau der eingangs beschriebenen Produkte mit PA 6-Folie.

Die Erfindung lässt zahlreiche Ausführungsformen zu. Zur weiteren Verdeutlichung ihres Grundprinzips sind verschiedene davon in der Zeichnung schematisiert dargestellt und werden nachfolgend beispielhaft beschrieben. Die Zeichnung zeigt in
- Figur 1: eine perspektivische Schnittansicht eines mehrschichtigen Bandes,
- Figur 2: einen Querschnitt des Bandes nach Fig. 1.
- Figur 3: eine perspektivische Schnittansicht einer Z-Verbindung für ein mehrschichtiges Band,
- Figur 4: eine perspektivische Schnittansicht einer Keilverbindung für ein mehrschichtiges Band.
- Figur 5: eine Draufsicht einer ersten Fingerprafilendlasverbindung eines mehrschichtigen Bandes,
- Figur 6: eine Draufsicht einer zweiten Fingerprofilendlosverbindung eines mehrschichtigen Bandes und
- Figur 7: eine Draufsicht einer dritten Fingerprofilendlosverbindung eines mehrschichtigen Bandes.

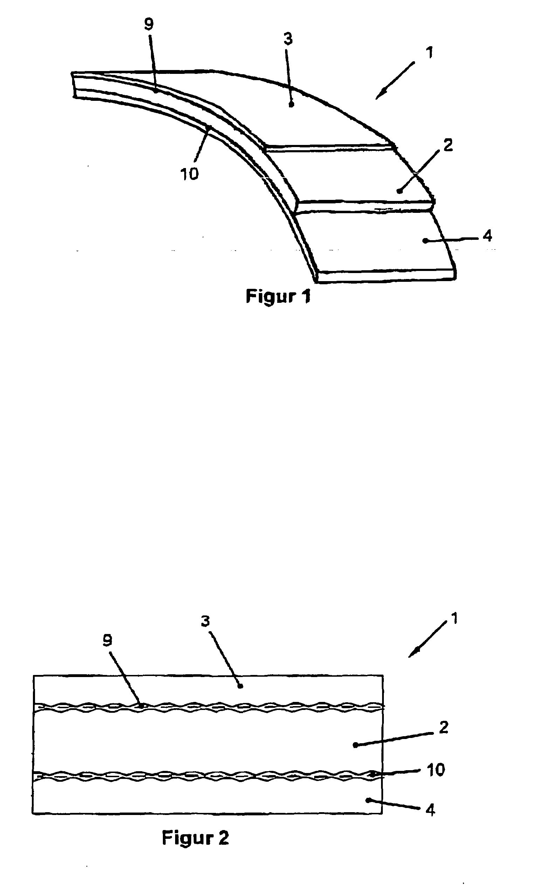

Figuren 1, 2 zeigen einen Ausschnitt eines als Transportband oder Prozessband ausgebildeten mehrschichtigen Bandes 1 mit einer ein Copolymer aufweisenden Zugschicht 2 und mit einer - in diesem Ausschnitt nicht dargestellten - Endiosverbindung in einer perspektivischen Schnittansicht. Im Einzelnen besteht die Zugschicht 2 In diesem Ausführungsbeispiel aus einer Copolyamidfolle, wobei das Copolyamid der Copolyamidfolie bevorzugt Polyamid 6 und Polyamid 6.6 aufweist und wobei die Copolyamidfolie aus mehreren, gleichartigen Folien besteht.

Beidseitig der Zugschicht 2 sind Funktionsschichten 3, 4 angeardnet, und zwar einerseits, auf der Zugschicht 2, eine erste Funktionsschicht 3 als Deckschicht aus Leder, Gummi oder Textil, zum Beispiel Polyamidgewebe, und andererseits, unter der Zugschicht 2, eine zweite Funktionsschicht 4 als Reibschicht aus Gummi, Textil oder Leder. Die Zugschicht 2 und die Funktionsschichten 3, 4 sind mittels jeweils einer Verklebung 9, 10, die auch ein Gewebe umfassen kann, miteinander verbunden.

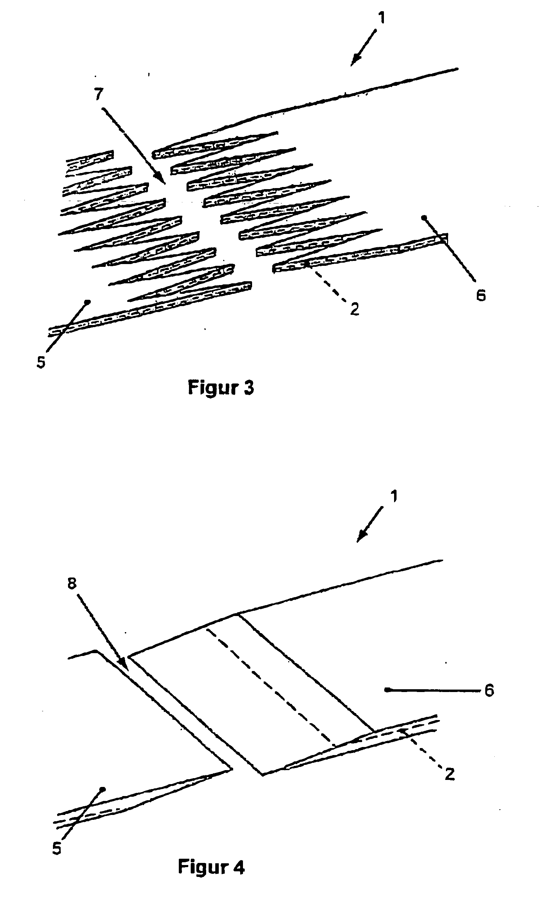

In Figur 3 ist eine Z-Verbindung 7 für eine Endlosverbindung eines mehrschichtigen Bandes 1 mit einer ein Copolymer aufweisenden Zugschicht 2 veranschaulicht, und zwar in einem ungefügten Zustand von Bandenden 5, 6 des Bandes 1. Nach einem Fügen der Bandenden 5, 6 werden diese in der Z-Verbindung miteinander verschweißt.

Außerdem veranschaulicht Figur 4 eine Keilverbindung 8 für eine Endlosverbindung eines mehrschichtigen Bandes 1 mit einer ein Copolymer aufweisenden Zugschicht 2. Auch diese Darstellung zeigt einen ungefügten Zustand von Bandenden 5, 6 des Bandes 1. Nach einem Fügen der Bandenden 5, 6 werden diese in der Keilverbindung miteinander verschweißt und/oder verklebt.

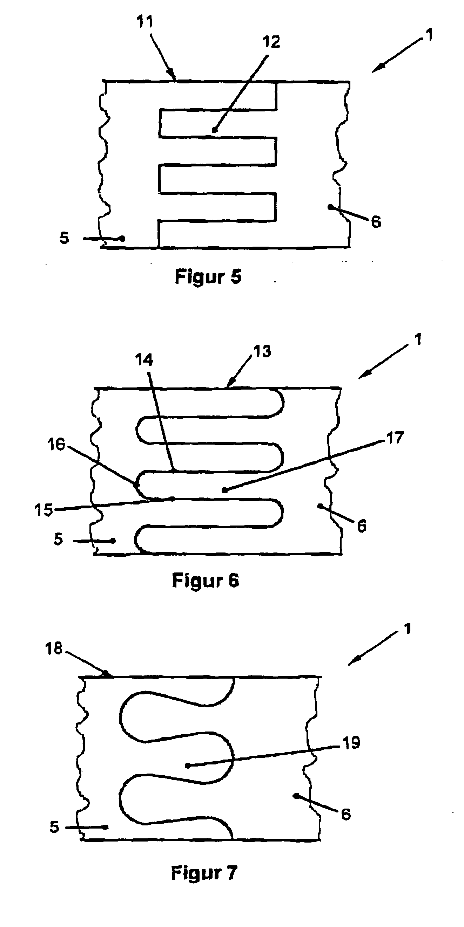

Figuren 5 bis 7 zeigen jeweils in einer Draufsicht und in gefügtem Zustand weitere Verbindungsmöglichkeiten, und zwar im Einzelnen Fingerprofilendlosverbindungen 11, 13, 18, für eine Endlosverbindung eines mehrschichtigen Bandes 1 mit einer ein Copolymer aufweisenden Zugschicht.

Dabei zeigt Figur 5 eine Endlosverbindung eines mehrschichtigen Bandes 1 als erste Fingerprofilendlosverbindung 11 mit jeweils rechteckigen, an gefügten Bandenden 5, 6 angeordneten und miteinander in einem Schweißvorgang verschmolzenen Fingern 12. In Figur 6 ist eine Endlosverbindung eines mehrschichtigen Bandes 1 als zweite Fingerprofilendlosverbindung 13 mit jeweils parallele Seitenflanken 14, 15 sowie ein abgerundetes Fingerende 16 aufweisenden, an gefügten Bandenden 5, 6 angeordneten und miteinander in einem Schweißvorgang verschmolzenen Fingern 17 dargestellt. Eine weitere Endlosverbindung zeigt Figur 7 als dritte Fingerprofilendlosverbindung 18, wobei jeweils an gefügten Bandenden 5, 6 angeordnete Finger 19 puzzleteilartig ineinander greifen. Auch diese Finger 19 sind miteinander In einem Schweißvorgang verschmolzen.

Die in Figuren 3 bis 7 dargestellten Verbindungen eignen sich jeweils besonders für die Endlosverbindung des mehrschichtigen Bandes 1 nach Figuren 1, 2.

## Patentansprüche

1. Mehrschichtiges Band, insbesondere Antriebs- oder Transportband, mit einer Zugschicht (2), die ein Copolymer aufweist, und mit einer Endlosverbindung, die eine Verschweißung der Zugschicht (2) aufweist, **dadurch gekennzeichnet, dass** das Copolymer gereckt ist und die Zugschicht (2) mindestens eine Copolymerfolie oder mindestens ein Copolymergewebe und einen Schmelzpunkt von unter 200 °C aufweist.

2. Band nach Anspruch 1, **dadurch gekennzeichnet, dass** das Copolymer ein Copolyamid aufweist.

3. Band nach Anspruch 2, **dadurch gekennzeichnet, dass** das Copolyamid ein Polyamid 6 und ein Polyamid 6.6 aufweist.

4. Band nach Anspruch 3, **dadurch gekennzeichnet, dass** die Zugschicht (2) aus mindestens zwei miteinander verklebten und/oder laminierten Copolymerfolien oder aus mindestens zwei miteinander verklebten und/oder laminierten Copolymergeweben besteht.

5. Band nach zumindest einem der vorhergehenden Ansprüche, **dadurch gekennzeichnet, dass** die Endlosverbindung eine Keilverbindung (8) mit einer Verschweißung und einer Verklebung aufweist.

6. Band nach zumindest einem der Ansprüche 1 bis 4, **dadurch gekennzeichnet, dass** die Endlosverbindung eine Verbindung mit ineinandergreifenden Elementen mit einer Verschweißung aufweist.

7. Band nach zumindest einem der vorhergehenden Ansprüche, **dadurch gekennzeichnet, dass** eine Funktionsschicht (3, 4) aus einem Leder und/oder aus einem Gummi und/oder aus einem Textil und/oder aus einem Polymerwerkstoff vorgesehen ist.

8. Band nach Anspruch 7, **dadurch gekennzeichnet, dass** die Zugschicht (2) beidseitig mit einer Funktionsschicht (3, 4) versehen ist.

## Claims

1. A multilayered belt, in particular a drive belt or transport bent, with a tensile layer (2), which comprises a copolymer, and with a continuous connection which comprises a welding of the tensile layer (2), **characterised in that** the copolymer is stretched and the tensile layer (2) comprises at least one copolymer film or at least one copolymer fabric and has a melting point of below 200 °C.

2. The belt according to claim 1, **characterised in that** the copolymer comprises a copolyamide.

3. The belt according to claim 2, **characterised in that** the copolyamide comprises a polyamide 6 and a polyamide 6.6.

4. The belt according to claim 3, **characterised in that** the tensile layer (2) consists of at least two copolymer films adhered and/or laminated together or at least two copolymer fabrics adhered and/or laminated together.

5. The belt according to at least one of the preceding claims, **characterised in that** the continuous connection consists of a wedge connection (8) with welding and adhesion.

6. The belt according to at least one of claims 1 to 4, **characterised in that** the continuous connection comprises a connection with interconnecting elements with a welding.

7. The belt according to at least one of the preceding claims, **characterised in that** a functional layer (3, 4) made of leather and/or rubber and/or a textile and/or a polymer material is provided.

8. The belt according to claim 7, **characterised in that** the tensile layer (2) is provided with a functional layer (3, 4) on both sides.

## Revendications

1. Bande multicouche, en particulier bande d'entraînement ou de transport, comportant une couche de traction (2), qui présente un copolymère, et une liaison continue, qui présente un soudage de la couche de traction (2), **caractérisée en ce que** le copolymère est étiré et **en ce que** la couche de traction (2) présente au moins une pellicule copolymère ou au moins un tissu copolymère et a un point de fusion inférieur à 200 °C.

2. Bande selon la revendication 1, **caractérisée en ce que** le copolymère comporte un copolyamide.

3. Bande selon la revendication 2, **caractérisée en ce que** le copolyamide comporte un polyamide 6 et un polyamide 6.6.

4. Bande selon la revendication 3, **caractérisée en ce que** le couche de traction (2) est constituée d'au moins deux pellicules copolymères stratifiées et / ou collées l'une à l'autre, ou est constituée d'au moins deux tissus copolymères stratifiés et / ou collés l'un à l'autre.

5. Bande selon au moins l'une quelconque des revendications précédentes, **caractérisée en ce que** la liaison continue présente un clavetage (8) avec une soudure et un collage.

6. Bande selon au moins l'une quelconque des revendications 1 à 4, **caractérisée en ce que** la liaison continue présente une liaison avec des éléments s'interpénétrant avec une soudure.

7. Bande selon au moins l'une quelconque des revendications précédentes, **caractérisée en ce qu'**une couche fonctionnelle (3, 4) constituée d'un cuir et/ou d'un caoutchouc et/ou d'un textile et/ou d'une substance polymère est prévue.

8. Bande selon la revendication 7, **caractérisée en ce que** la couche de traction (2) est dotée d'une couche fonctionnelle (3, 4) des deux côtés.
